# NEW EUROPEAN PATENT SPECIFICATION

(11) **EP 2 664 497 B2**
(45) Date of publication and mention of the opposition decision: **11.04.2018**
(45) Mention of the grant of the patent: 06.05.2015
(21) Application number: 12168494.8
(22) Date of filing: 18.05.2012
(51) Int. Cl.: B60R 9/06

(54) **Load carrier for a vehicle**
Lastträger für ein Fahrzeug
Support de charge pour véhicule

(43) Date of publication of application: 20.11.2013
(73) Proprietor: Thule Sweden AB, 330 33 Hillerstorp (SE)
(72) Inventor: Malm, Torbjörn, S-111 29 Stockholm (SE)
(74) Representative: Wallentin, Lars

(56) References cited:
- EP-A2- 2 017 131
- EP-B1- 1 539 537
- DE-A1- 10 144 550
- DE-A1- 10 257 903
- https://www.youtube.com/watch?v=p5m WqA-pXI
- http://www.youtube.com/watch?v=yKZ7kXC-hpc
- https://www.youtube.com/watch?v=83SGcFyrZoY

## Description

### TECHNICAL FIELD

The present invention relates to a load carrier for a vehicle, such as a sports equipment carrier e.g. a bike carrier, adapted to be coupled to a towing hook of a vehicle. The load carrier can be positioned in a carrier position in which it can receive and carry a load, and a storage position, in which it has a more compact form, enabling it to be stored in an effective manner. The load carrier has a license plate holder which can be tucked away in a convenient manner.

### BACKGROUND OF THE INVENTION

Load carriers, e.g. sports equipment carriers, e.g. bicycle carriers, also referred to as bike carriers, can usually be coupled to the rear of a vehicle by being coupled to a towing hook of the vehicle. As such they usually tend to obstruct the rear lights of the vehicle. By law, in many countries, the rear lights of the vehicle must be properly displayed to third parties, and is thus not permitted to be obstructed from view. The same applies for the vehicle license plate, sometimes also referred to as the vehicle registration plate. Load carriers may thus be provided with lights and a license plate holder.

The European Patent No. EP 1,539,537 B1, Thule Sweden AB, discloses a load carrier for carrying a bicycle according to the preamble of claim 1, which is foldable to make the load carrier smaller permitting it to be tucked away and stored in an easy manner. The load carrier has two foldable portions and a middle portion onto which a license plate holder is positioned.

### SUMMARY

Load carriers of the above mentioned type has some drawbacks. After being folded it is still somewhat bulky and does not provide for a load carrier which is relatively small and compact when ready for storage. It is an object of the present invention to reduce the drawbacks of the above mentioned load carrier, or at least to provide for an improved load carrier, or at least to provide for a useful alternative. The objects of the present inventions are met by a load carrier for a vehicle, preferably adapted to be coupled to a towing hook of the vehicle. The load carrier comprises a first load receiving section, a second load receiving section, the first and second load receiving sections being pivotally connected permitting the first and the second load receiving sections to be positioned in an carrier position and a storage position. The load carrier comprises a license plate holder.

The license plate holder is pivotally connected to the first and the second load receiving section, so that the license plate holder can be pivoted to the storage position via the displacement of at least one of the first or the second load receiving sections.

The load carrier provides for a load carrier which can be folded into a small and compact load carrier which can be stored in a convenient manner, even if the load carrier is provided with a license plate via the license plate holder. The license plate holder can be automatically pivoted and positioned in a storage position by simply displacing one or more of the load receiving sections. This is a very comfortable way of turning the load carrier to a relatively compact size for storage, or just to reduce the wind resistance if no load is carried on the load carrier.

The load carrier can be specifically adapted to be positioned on the rear of the vehicle, e.g. provided with a connection site for connecting to a towing hook of the vehicle.

The license plate holder can be configured to pivot in different ways. For example, the license plate holder can be pivotally connected to the first load receiving section at a first pivot point, the first pivot point having a fixed position with respect to the license plate holder and the first load receiving section. This will enable the license plate holder to pivot about that pivot point in a controlled manner.

Advantageously, the license plate holder is pivotally connected to the second load receiving section at a second pivot point and, the second pivot point is displaceable with respect to the license plate holder or the second load receiving section. This provides for the license plate holder to pivot in a controlled manner, i.e. the pivot path can be controlled by manipulating the displacement of the second pivot point. In fact, the pivot path can be controlled by manipulating the displacement of any of the pivot points to a desired pivot path.

According to an aspect, the second pivot point is displaceable with respect to the license plate holder. Optionally, the second pivot point is displaceable with respect to the second load receiving section. For example, if the second pivot point is formed by a pin member which can be displaced din a guiding track. The pin member can be arranged on the license plate holder and the guiding track can be arranged on the second load receiving section, or vice versa.

According to an aspect, the guiding track is formed by a groove, a slot, or at least one protruding element. The guiding track can have different forms and elongations. The guiding track can be formed by parts of the license plate holder, e.g. the one of the longitudinal sides of the license plate holder, or by a slot, groove, or protruding element on the license plate holder.

It should be noted that the size of license plate holder can vary. In the described embodiments herein the size of the license plate holder substantially corresponds to the size of a license plate in a European country, such as Sweden. However, the size and shape of the license plate holder can be formed to fit any license plate. It is also conceivable that the license plate holder is significantly smaller than the license plate itself, the important aspect is that a pivotal motion can be transferred to the license plate holder, and thus the license plate. This will enable the bike carrier to be small and compact when positioned in the storage position.

According to an aspect, the guiding track has a curved form. Such curved form can comprises at least one crest, two crests or more.

According to an aspect, when the first and the second load receiving section is positioned in the storage position, the first and the second load receiving section are positioned substantially adjacent each other.

According to an aspect, when the first and the second load receiving sections are positioned in the storage position, the first and the second load receiving sections are substantially parallel with a vertical axis.

According to an aspect, the first and the second load receiving sections comprises a first and a second load receiving surface. The first and the second load receiving surfaces are positioned facing each other when the load carrier is positioned in the storage position. According to an aspect, when the first and the second load receiving sections are positioned in the carrier position, the first and the second load receiving sections are positioned in a folded out, side-by-side position.

According to an aspect, when the first and the second load receiving sections are positioned in the storage position, the first and the second load receiving sections are aligned along a horizontal axis.

### BRIEF DESCRIPTION OF THE DRAWINGS

Non-limiting embodiments of the present invention will be described in greater detail with reference to the accompanying figures in which;
figure 1a is a view in perspective of a load carrier according to an embodiment;
figure 1b shows the load carrier of figure 1 a with a view towards the license plate holder;
figure 1c shows the load carrier of figure 1 a with a view towards the first and the second load receiving sections and from above;
figures 2a-2c show the load carrier in different positions between the carrier position and the storage position;
figure 3 shows the load carrier in the storage position and;

### DETAILED DESCRIPTION OF PREFERRED EMBODIMENTS

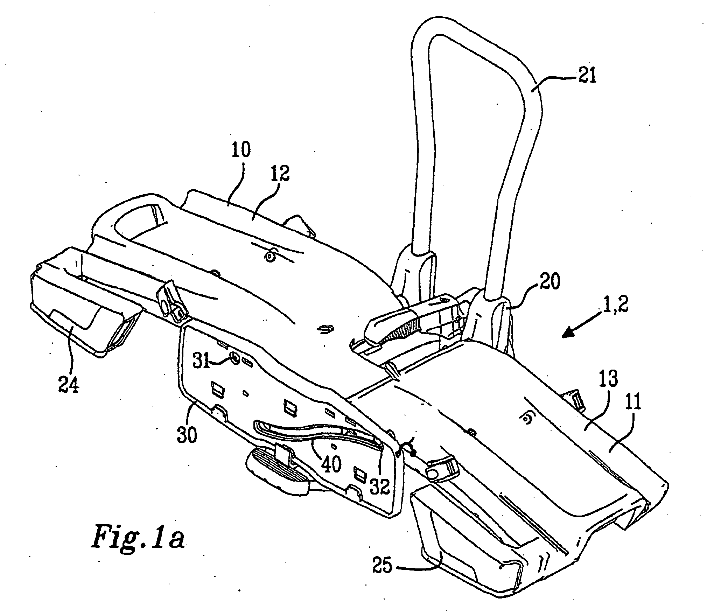

Figures 1a-1c shows a load carrier 1 for a vehicle (not shown) adapted to be attached to a towing hook of the vehicle. The load carrier is in the shown embodiments a bicycle carrier 2, in this case adapted to carry two bicycles. Instead of carrying bikes, the load carrier could carry luggage, sports equipment such as surfboards, skies, or any other load usable to man.

The bike carrier 2 can be positioned in a carrier position, as shown in figures 1a-1c in which the bike carrier 2 can receive and carry a bike for transportation, and a storage position, in which the bike carrier 2 can be put away for storage. The bike carrier 2 is foldable; it can be pivoted, between a carrier position and a storage position. In the storage position, the bike carrier could possibly be transported on the towing hook of the vehicle but it cannot be used for transporting bicycles to the same extent as when being in the carrier position.

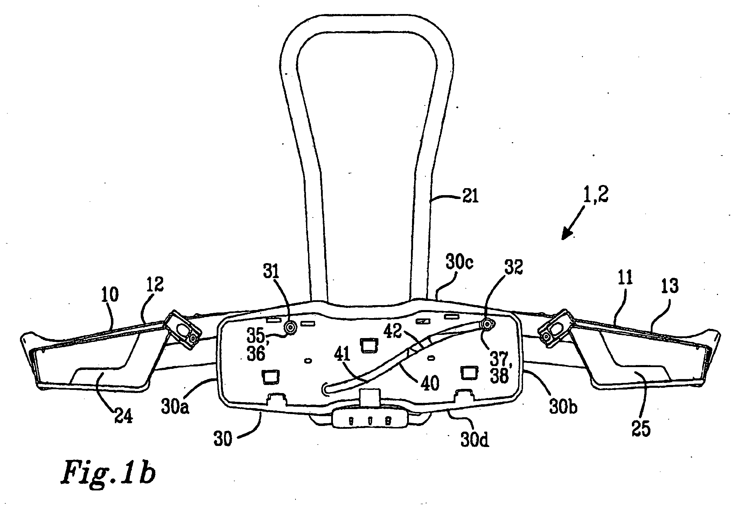

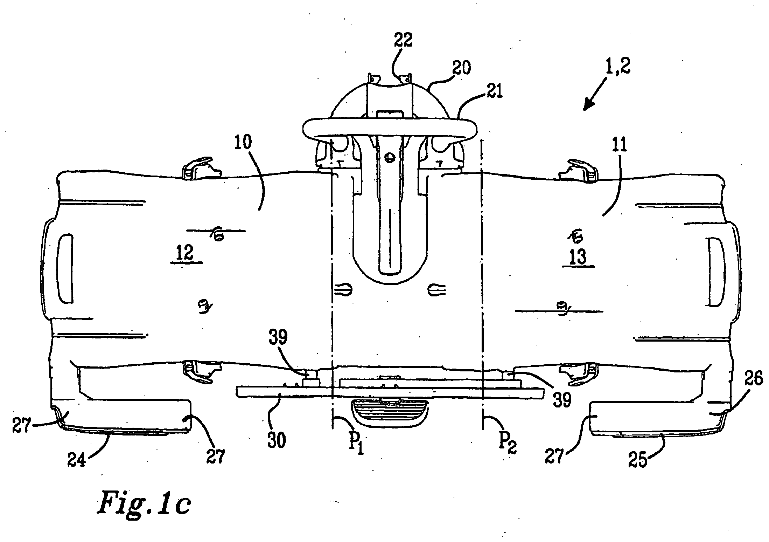

In the following, the bike carrier 2 will be described in greater detail with reference to the figures 1a-1c in which figure 1 a is a view in perspective of the bike carrier 2; figure 1b shows the bike carrier 2 with a view towards the front of the bike carrier 2, i.e. with a view towards the license plate holder, and; figure 1c shows the bike carrier with a view from above. The bike carrier 2 comprises a first and a second load receiving section 10, 11, each comprising a load receiving surface 12, 13. The first and the second load receiving sections 10, 11 are pivotally mounted to a frame member 20 comprising a tow bar coupling 22 (not shown) adapted to be mounted to the tow bar of the vehicle. The first and the second load receiving sections 10, 11 thus are thus adapted to pivot about a first and a second pivot axis P1, P2 respectively; indicated with dashed lines in figure 1c. The tow bar coupling 22 is of a standard type comprising a socket adapted to receive and connect to a ball of the towing hook of the vehicle to form a ball and socket joint and is best shown in figure 1c. In figure 1a the first and the second load receiving sections 10, 11 are arranged substantially aligned in a side-by side manner. The frame member 20 further comprises a U-formed bar 21 to which one or more bikes can be coupled, optionally via securing members such as lines, attachment arms or the like, for providing support and stability during transportation, i.e. a load support bar. A bicycle can thus be positioned on the load carrier 1 with one wheel on each load receiving section and then further be supported via the U formed bar 21. The wheels of the bicycle may further be attached to the load receiving sections respectively.

A first and a second rear light 24, 25 is arranged on the first and the second load receiving section respectively of the bike carrier 2, and are powered by the electrical system of the vehicle via e.g. a cord. The first and the second rear lights 24, 25 each comprises a proximal end 26 and a distal end 27, and is attached to the respective load receiving section 10, 11 at the proximal end 26. The first and the second rear lights 24, 25 extends substantially parallel with the extension of the first and the second load receiving sections 10, 11. The first and the second rear lights 24, 25 are further separated a distance from the first and the second load receiving sections 10, 11 of about 1-10 cm, advantageously 2-7 cm, or an appropriate distance adapted for the license plate holder 30 and an attached license plate (not shown) to fit there between.

The bike carrier comprises a license plate holder 30. The license plate holder 30 enables a user to connect, or attach, a vehicle license plate to the license plate holder 30. The license plate holder 30 is attached to both the first and the second load receiving section 10, 11, and in the shown embodiment, pivotally connected to the first and the second load receiving sections 10, 11 at a first and a second pivot point 31, 32.

The first pivot point 31 is in the shown embodiment a fix pivot point with respect to the license plate holder 30 and connects the license plate holder 30 with the first load receiving section. The first pivot point 31 comprises a pin 35, in this case a screw 36 which attaches the license plate holder 30 to the first load receiving section 10. In a similar manner is the second connection point 32 formed by a second pin 37, formed by a screw 38, connecting the license plate holder 3 to the second load receiving section 11. A first and a second bushing 39 distance the license plate holder 30 from the first and the second load receiving section 10, 11.

The second pivot point 32 is displaceable with respect to the license plate holder 30. As can be seen in figures 1a-1b, the license plate holder 309 comprises a guiding track 40, in the form of a slot 41. The slot 41 is formed by an elongated aperture extending through the whole of the thickness of the license plate holder 30. Optionally, the guiding track 40 could be a groove, formed by protruding elements, or similar. The important feature is that the guiding track 40 provides for guiding means to the second pin 37 for reasons as will be described herein.

The license plate holder 30 has a substantially rectangular form having a first and a second transverse side 30a, 3b, and a first and a second longitudinal side 30c, 30d. The first longitudinal side 30c is intended to be an upper longitudinal side, and the second longitudinal side 30d is intended to be a lower ground facing side, when the bike carrier is mounted to a vehicle as intended and being positioned in the carrier position.

The guiding track 40 has arc shaped form comprising a first and a second crest 41, 42 and extending substantially between the first and the second longitudinal sides 30c, 30d of the license plate holder 30. It should be noted that the guiding track 40 can have other forms such as a straight line, an arc shaped form with only one crest, etc. The shape and form of the guiding track 40 is determined by the appropriate rotational path which the license plate holder 30 is intended to follow.

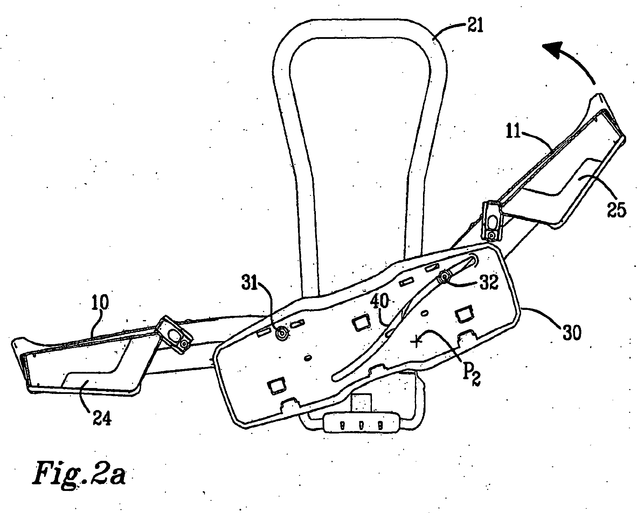

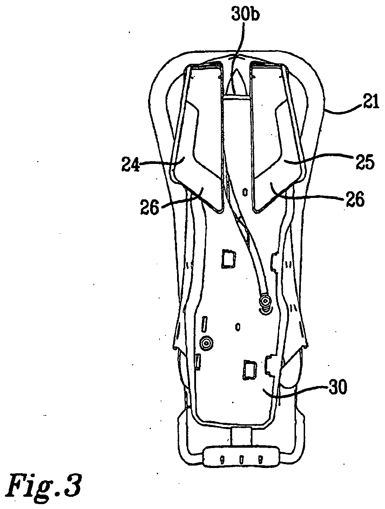

Figures 2a-2c shows the bike carrier 2 of figure 1 as the bike carrier 2 is transferred from the carrier position, shown in figures 1a-1c, to the storage position, shown in figure 3.

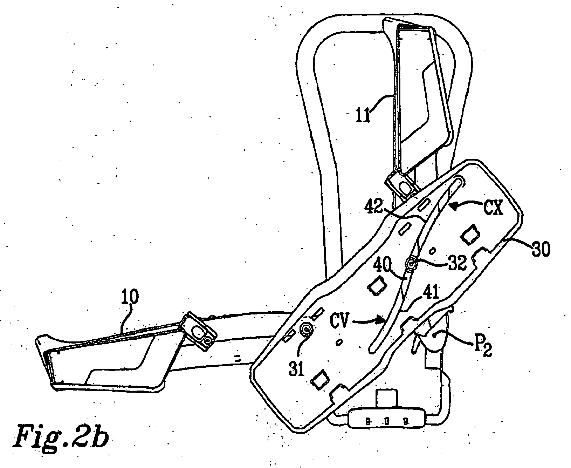

Figures 2a-2c shows the bike carrier 2 in intermediate positions between the carrier position and the storage position. The transformation of the bike carrier 2 will be described in greater detail with reference to figures 2a-2c. In figure 2a, the second load receiving section 11 is pivoted about the pivot axis P2, e.g. by a user. As is noted, the second pivot point 32 slides along the guiding track 40 as the license plate holder 30 pivots about the first pivot point 31 due to the displacement of the second load receiving section 11. In figure 2b the second load receiving section 11 has been displaced to a substantially vertical position and is substantially aligned with the main extension of the U-formed bar 21 of the frame member 20. The second load receiving section 11 is now positioned in the storage position. However, as is noticed, the license plate holder 30 is only angled with an angle of about 45 degrees with respect to the original position of the second load receiving section 11, i.e. the position which the second load receiving section had in the carrier position. The second pivot point 32 is now substantially in the middle of the guiding track 40. As is further noticed, the arc shaped form of the guiding track 40 changes transform from a convex form CX to a concave form CV at this point so that the second pivot point 32 is displaced along the concave form CV for the remaining section of the guiding track 40. The first crest 41 is thus on the concave formed CV section of the guiding track 40 and the second crest, which is pointing in the opposite direction to the first crest 41, is on the convex CX section of the guiding track 40.

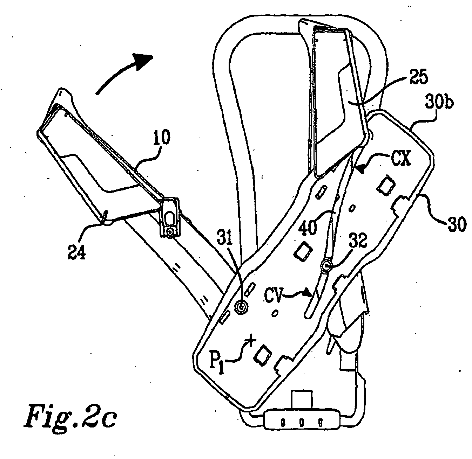

As the first load receiving section 10 is displaced towards its storage position, as indicated by the arrow in figure 2c, the license plate holder 30 pivots the remaining portion to a substantially vertical position as seen in figure 3. In figure 3, the first and the second load receiving sections 10, 11 are positioned in the storage position, the license plate holder is positioned in the storage position, and the bike holder 2 is thus in the storage position.

Turning back to figure 1c, the first and the second rear lights 24, 25 each comprises a proximal end 26 and a distal end 27. As the license plate holder 30 is pivoted, the second transverse end 30b of the license plate holder 30 will be inserted between the first and the second rear light, and the first and the second load receiving sections 10, 11, thus providing a very compact sized storage form of the bike carrier 2.

In an embodiment, both the first and the second pivot points 31, 32 could be displaceable to some extent. The principle described above with a pin member and a guiding track can also be used for the first pivot point dependent on how the license plate holder is intended to be pivoted with the first and the second load receiving sections 10, 11. The license plate holder 30 could thus be arranged with one or more guiding tracks e.g. two guiding tracks. Each pivot point could have a guiding track. It is also conceivable that one pivot point has two guiding tracks; the pivot direction of the license plate holder 30 could in this case be changed when a user changes guiding track. In this way it is possible that the license plate holder 30 is substantially horizontal, as shown in figures 1a-1c, while the first and the second load receiving sections 10, 11 are arranged in the storage position, as shown in figure 3.

The license plate holder 30 can thus be automatically pivoted and positioned in a storage position by simply displacing one or more of the load receiving sections. The displacement of the one or more of the load receiving sections can be done manually by a user or via an electrical motor upon a user issued command.

## Claims

1. A load carrier (1, 2) for a vehicle comprising
a first load receiving section (10),
a second load receiving section (11),
said first and second load receiving sections (10,11) being pivotally connected permitting said first and said second load receiving sections (10, 11) to be positioned in an carrier position and a storage position,
said load carrier (1, 2) further comprising a license plate holder (30), **characterized in that**
said license plate holder (30) is pivotally connected to said first and said second load receiving sections (10, 11), so that said license plate holder (30) can be pivoted to said storage position via the displacement of at least one of said first or second load receiving sections (10, 11).

2. The load carrier (1, 2) according to claim 1 wherein said license plate holder (30) is pivotally connected to said first load receiving sections (10, 11) at a first pivot point (31), said first pivot point (31) having a fixed position with respect to said license plate holder (30) and said first load receiving section (10).

3. The load carrier (1, 2) according to any one of the preceding claims, wherein said license plate holder (30) is pivotally connected to said second load receiving section (11) at a second pivot point (32) and, said second pivot point (32) is displaceable with respect to said license plate holder (30) or said second load receiving section (11).

4. The load carrier (1, 2) according to claim 3, wherein said second pivot point (32) is displaceable with respect to said license plate holder (30).

5. The load carrier (1, 2) according to claim 3, wherein said license plate holder (30) and said second pivot point (32) is displaceable with respect to said second load receiving section (11).

6. The load carrier (1, 2) according to any one of the preceding claims, wherein said second pivot point (32) is formed by a pin member (37, 38) displaceable in a guiding track (40).

7. The load carrier (1, 2) according to claim 6, wherein said guiding track (40) is formed by a groove, a slot, and/or at least one protruding element of said license plate holder (30), or by a side of the license plate holder (30d).

8. The load carrier (1, 2) according to claim 7, wherein said guiding track (40) has a curved form.

9. The load carrier (1, 2) according to claim 8, wherein said curved form of said guiding track (40) comprises a first and a second crest (41, 42).

10. The load carrier (1, 2) according to any one of the preceding claims, wherein said first and said second load receiving sections (10, 11) comprises a first and a second load receiving surface (12, 13), and in that said first and said second load receiving surface (12, 13) are positioned facing each other, when said load carrier (1, 2) is positioned in said storage position.

11. The load carrier (1, 2) according to claim 10, wherein when said first and said second load receiving sections (10, 11) are positioned in said storage position, said first and said second load receiving sections (10, 11) are substantially parallel with a vertical axis.

12. The load carrier (1, 2) according to any one of the preceding claims, wherein when said first and said second load receiving sections (10, 11) are positioned in said carrier position, said first and said second load receiving sections (10, 11) are positioned in a folded out, side-by-side configuration.

13. The load carrier (1, 2) according to claim 12, wherein said first and said second load receiving sections (10, 11) are positioned in said storage position, said first and said second load receiving sections (10, 11) are substantially aligned along a horizontal axis.

14. The load carrier (1, 2) according to any one of the preceding claims, wherein said load carrier (1, 2) comprises a connection site (22) for connecting to a towing hook of said vehicle.

## Patentansprüche

1. Lastträger (1, 2) für ein Fahrzeug, aufweisend
einen ersten Lastaufnahmebereich (10), einen zweiten Lastaufnahmebereich (11),
wobei der erste und der zweite Lastaufnahmebereich (10, 11) schwenkbar verbunden sind, so dass der erste und der zweite Lastaufnahmebereich (10, 11) in einer Trägerposition und einer Aufbewahrungsposition positioniert werden können,
wobei der Lastträger (1, 2) ferner einen Nummernschild-Halter (30) aufweist,
**dadurch gekennzeichnet, dass**
der Nummernschild-Halter (30) mit dem ersten und zweiten Lastaufnahmebereich (10, 11) schwenkbar verbunden ist, so dass der Nummernschild-Halter (30) über die Verlagerung von mindestens einem von dem ersten oder zweiten Lastaufnahmebereich (10, 11) in die Aufbewahrungsposition geschwenkt werden kann.

2. Lastträger (1, 2) nach Anspruch 1, wobei der Nummernschild-Halter (30) mit dem ersten Lastaufnahmebereich (10, 11) an einem ersten Schwenkpunkt (31) schwenkbar verbunden ist, wobei der erste Schwenkpunkt (31) eine feststehende Position in Bezug auf den Nummernschild-Halter (30) und den ersten Lastaufnahmebereich (10) aufweist.

3. Lastträger (1, 2) nach einem der vorhergehenden Ansprüche, wobei der Nummernschild-Halter (30) mit dem zweiten Lastaufnahmebereich (11) an einem zweiten Schwenkpunkt (32) schwenkbar verbunden ist und der zweite Schwenkpunkt (32) in Bezug auf den Nummernschild-Halter (30) oder den zweiten Lastaufnahmebereich (11) verschiebbar ist.

4. Lastträger (1, 2) nach Anspruch 3, wobei der zweite Schwenkpunkt (32) in Bezug auf den Nummernschild-Halter (30) verschiebbar ist.

5. Lastträger (1, 2) nach Anspruch 3, wobei der Nummernschild-Halter (30) und der zweite Schwenkpunkt (32) in Bezug auf den zweiten Lastaufnahmebereich (11) verschiebbar sind.

6. Lastträger (1, 2) nach einem der vorhergehenden Ansprüche, wobei der zweite Schwenkpunkt (32) durch ein Stiftelement (37, 38) gebildet ist, das in einer Führungsbahn (40) verschiebbar ist.

7. Lastträger (1, 2) nach Anspruch 6, wobei die Führungsbahn (40) durch eine Nut, einen Schlitz und/oder mindestens ein vorstehendes Element des Nummernschild-Halters (30) oder durch eine Seite der Nummernschild-Halters (30d) gebildet ist.

8. Lastträger (1, 2) nach Anspruch 7, wobei die Führungsbahn (40) eine gekrümmte Form aufweist.

9. Lastträger (1, 2) nach Anspruch 8, wobei die gekrümmte Form der Führungsbahn (40) einen ersten und einen zweiten Scheitel (41, 42) aufweist.

10. Lastträger (1, 2) nach einem der vorhergehenden Ansprüche, wobei der erste und der zweite Lastaufnahmebereich (10, 11) eine erste und eine zweite Lastaufnahmefläche (12, 13) aufweisen, und dass die erste und die zweite Lastaufnahmefläche (12, 13) einander zugewandt positioniert sind, wenn der Lastträger (1, 2) in der Aufbewahrungsposition angeordnet ist.

11. Lastträger (1, 2) nach Anspruch 10, wobei bei Anordnung des ersten und des zweiten Lastaufnahmebereichs (10, 11) in der Aufbewahrungsposition der erste und der zweite Lastaufnahmebereiche (10, 11) im Wesentlichen parallel zu einer vertikalen Achse angeordnet sind.

12. Lastträger (1, 2) nach einem der vorhergehenden Ansprüche, wobei bei Anordnung des ersten und des zweiten Lastaufnahmebereichs (10, 11) in der Trägerposition der erste und der zweite Lastaufnahmebereich (10, 11) in einer auseinandergeklappten Konfiguration Seite an Seite positioniert sind.

13. Lastträger (1, 2) nach Anspruch 12, wobei bei Anordnung des ersten und des zweiten Lastaufnahmebereichs (10, 11) in der Aufbewahrungsposition der erste und der zweite Lastaufnahmebereich (10, 11) im Wesentlichen entlang einer horizontalen Achse ausgerichtet sind.

14. Lastträger (1, 2) nach einem der vorhergehenden Ansprüche, wobei der Lastträger (1, 2) eine Verbindungsstelle (22) zur Verbindung mit einer Anhängerkupplung des Fahrzeugs aufweist.

## Revendications

1. Porte-charge (1, 2) pour un véhicule comprenant
une première section réceptrice de charge (10), une seconde section réceptrice de charge (11),
lesdites première et seconde sections réceptrices de charge (10, 11) étant raccordées en pivotement permettant de positionner ladite première et ladite seconde sections réceptrices de charge (10, 11) dans une position porteuse et une position de stockage,
ledit porte-charge (1, 2) comprenant en outre un support de plaque d'immatriculation (30),
**caractérisé en ce que**
ledit support de plaque d'immatriculation (30) est raccordé en pivotement à ladite première et ladite seconde sections réceptrices de charge (10, 11), de sorte que ledit support de plaque d'immatriculation (30) puisse être pivoté vers ladite position de stockage via le déplacement d'au moins l'une desdites première ou seconde sections réceptrices de charge (10, 11).

2. Porte-charge (1, 2) selon la revendication 1, dans lequel ledit support de plaque d'immatriculation (30) est raccordé en pivotement à ladite première section réceptrice de charge (10, 11) en un premier point de pivot (31), ledit premier point de pivot (31) ayant une position fixe par rapport audit support de plaque d'immatriculation (30) et à ladite première section réceptrice de charge (10).

3. Porte-charge (1, 2) selon l'une quelconque des revendications précédentes, dans lequel ledit support de plaque d'immatriculation (30) est raccordé en pivotement à ladite seconde section réceptrice de charge (11) en un second point de pivot (32) et, ledit second point de pivot (32) est déplaçable par rapport audit support de plaque d'immatriculation (30) ou à ladite seconde section réceptrice de charge (11).

4. Porte-charge (1, 2) selon la revendication 3, dans lequel ledit second point de pivot (32) est déplaçable par rapport audit support de plaque d'immatriculation (30).

5. Porte-charge (1, 2) selon la revendication 3, dans lequel ledit support de plaque d'immatriculation (30) et ledit second point de pivot (32) sont déplaçables par rapport à ladite seconde section réceptrice de charge (11).

6. Porte-charge (1, 2) selon l'une quelconque des revendications précédentes, dans lequel ledit second point de pivot (32) est formé par un organe de cheville (37, 38) déplaçable dans une piste de guidage (40).

7. Porte-charge (1, 2) selon la revendication 6, dans lequel ladite piste de guidage (40) est formée par une rainure, une fente, et/ou au moins un élément protubérant dudit support de plaque d'immatriculation (30), ou par un côté du support de plaque d'immatriculation (30d).

8. Porte-charge (1, 2) selon la revendication 7, dans lequel ladite piste de guidage (40) a une forme incurvée.

9. Porte-charge (1, 2) selon la revendication 8, dans lequel ladite forme incurvée de ladite piste de guidage (40) comprend une première et une seconde crête (41, 42).

10. Porte-charge (1, 2) selon l'une quelconque des revendications précédentes, dans lequel ladite première et ladite seconde sections réceptrices de charge (10, 11) comprennent une première et une seconde surface réceptrice de charge (12, 13), et en ce que ladite première et ladite seconde surface réceptrice de charge (12, 13) sont positionnées en regard l'une de l'autre, lorsque ledit porte-charge (1, 2) est positionné dans ladite position de stockage.

11. Porte-charge (1, 2) selon la revendication 10, dans lequel lorsque ladite première et ladite seconde sections réceptrices de charge (10, 11) sont positionnées dans ladite position de stockage, ladite première et ladite seconde sections réceptrices de charge (10, 11) sont sensiblement parallèles à un axe vertical.

12. Porte-charge (1, 2) selon l'une quelconque des revendications précédentes, dans lequel lorsque ladite première et ladite seconde sections réceptrices de charge (10, 11) sont positionnées dans ladite position porteuse, ladite première et ladite seconde sections réceptrices de charge (10, 11) sont positionnées dans une configuration côte à côte et dépliée.

13. Porte-charge (1, 2) selon la revendication 12, dans lequel ladite première et ladite seconde sections réceptrices de charge (10, 11) sont positionnées dans ladite position de stockage, ladite première et ladite seconde sections réceptrices de charge (10, 11) sont sensiblement alignées le long d'un axe horizontal.

14. Porte-charge (1, 2) selon l'une quelconque des revendications précédentes, dans lequel ledit porte-charge (1, 2) comprend un site de raccordement (22) pour raccordement à un crochet de remorquage dudit véhicule.
